# EUROPÄISCHE PATENTSCHRIFT

(11) **EP 1 378 208 B1**
(45) Veröffentlichungstag und Bekanntmachung des Hinweises auf die Patenterteilung: **02.01.2008**
(21) Anmeldenummer: 03015031.2
(22) Anmeldetag: 02.07.2003
(51) Int. Cl.: A61C 1/18, A61C 1/05

(54) **Medizinisches oder dentalmedizinisches Handstück mit einem hinteren und einem vorderen Handstückabschnitt**
Medical or dental handpiece with a rear and a front handpiece section
Pièce à main médical ou dentaire avec une partie arrière et frontale

(30) Priorität: 02.07.2002 DE 10229650
(43) Veröffentlichungstag der Anmeldung: 07.01.2004
(73) Patentinhaber: Kaltenbach & Voigt GmbH, 88400 Biberach / Riss (DE)
(72) Erfinder: Kuhn, Bernhard, 88400 Biberach (DE)
(74) Vertreter: Schmidt-Evers, Jürgen

(56) Entgegenhaltungen:
- DE-A- 2 802 325
- DE-A- 2 855 720
- DE-C- 3 433 877
- US-A- 5 230 624
- US-A- 6 106 287

## Beschreibung

Die Erfindung bezieht sich auf ein medizinisches oder dentalmedizinisches Handstück nach dem Oberbegriff des Anspruches 1.

Bei einem Handstück der vorliegenden Art besteht die Gefahr, dass kaum zu vermeidende Verunreinigungen im zuzuführenden Medium, insbesondere Wasser, die Medienleitung insbesondere im vorderen Bereich des Handstücks beeinträchtigen oder verstopfen können, z. B. im Bereich der Auslassdüse. Um diese Gefahr zu vermeiden oder zu verringern, ist bereits vorgeschlagen worden, ein Handstück mit einer seitlichen Einsteckausnehmung im Bereich der Medienleitung auszubilden, wobei durch die Einstecköffnung eine Patrone einer Reinigungsvorrichtung in der Einsteckausnehmung montierbar und demontierbar ist. Bei einer solchen Ausgestaltung bedarf es jedoch eines Verschlusses der Einstecköffnung, was die Bauweise aufwendiger macht. Außerdem wird durch das Vorhandensein eines Verschlusses das Erscheinungsbild des Handstücks verschlechtert.

Ferner ist aus der US 6,106,287 ein dentalmedizinisches Handstück bekannt, bei dem im hinteren Endbereich eine Filterkammer zur Filterung eines dem Handstück zugeführten Mediums ausgebildet. In dieser Kammer ist ein scheibenförmiger Filter angeordnet, der bei Bedarf ausgewechselt werden kann.

Der Erfindung liegt die Aufgabe zugrunde, ein Handstück der im Oberbegriff des Anspruchs 1 angegebenen Art bei Gewährleistung einer einfachen Bauweise hinsichtlich der Montage bzw. Demontage einer Patrone zu verbessern.

Diese Aufgabe wird durch die Merkmale des Anspruchs 1 gelöst. Bei der erfindungsgemäßen Ausgestaltung nach Anspruch 1 ist die Steckausnehmung für die Patrone in einem im hinteren Bereich des Handstücks befindlichen Einsatzstück zur Aufnahme des Kupplungselements angeordnet und von der Rückseite des Einsatzstücks her zugänglich. Da die Rückseite des Handstücks vom zugehörigen Anschlussteil abgedeckt ist, ist sie nicht sichtbar, und deshalb stört weder sie noch ein besonderes Verschlussteil das Aussehen des Handstücks. Da das Verschlussteil entfallen kann, wird auch die Bauweise wesentlich vereinfacht und preiswert.

Diese erfindungsgemäße Ausgestaltung eignet sich nicht nur für Reinigungsvorrichtungen, sondern auch für Patronen anderer Art, die durch eine Zuführungsleitung mit einer auf die Behandlungsstelle gerichteten Auslassöffnung im Handstück verbunden sind.

Im Falle einer Reinigungsvorrichtung für eine Medienleitung, insbesondere für Wasser, eignet sich diese erfindungsgemäße Ausgestaltung insbesondere dann, wenn das Handstück durch eine sogenannte Steck/Drehkupplung mit einem hinteren Anschlussteil verbindbar ist, wobei die Medienleitung die Steck/Drehkupplung Z-förmig durchsetzt. Bei dieser Ausgestaltung lässt sich der quer- bzw. radial gerichtete Abschnitt der Medienleitung in einfacher Weise mit der Steckausnehmung für die Patrone verbinden, so dass die Medienleitung die Steckausnehmung winkelförmig durchsetzt und der hintere Bereich der Patrone keiner Durchströmung bedarf und deshalb eine einfache Bauweise erreicht wird. Der hintere Bereich der Patrone kann als Stopfen der Abdichtung und Halterung der Patrone dienen, vorzugsweise durch eine Verschraubung.

Weiterbildungen dieser erfindungsgemäßen Ausgestaltung ermöglichen einen großen Durchströmungsquerschnitt im Bereich der Patrone und auch kleine sowie kostengünstig herstellbare Ausbildungen, die im Übrigen eine sichere Funktion gewährleisten.

Nachfolgend werden vorteilhafte Ausgestaltungen der Erfindung anhand von bevorzugten Ausführungsbeispielen und zugehörigen Zeichnungen näher erläutert. Es zeigen
- Fig. 1: ein erfindungsgemäßes Behandlungsinstrument mit einem Handstück und einem Abschlussteil in der Seitenansicht, teilweise axial geschnitten;
- Fig. 2: das Handstück in der Untersicht in einem vormontierten Zustand;
- Fig. 3: einen vorderen Bereich des Handstücks in teilweise geschnittener Draufsicht;
- Fig. 4: den Schnitt III-III in Fig. 3;
- Fig. 5: eine in das hintere Ende des Handstücks koaxial eingesetzte Einsatzbuchse in vergrößerter Darstellung und als Einzelteil;
- Fig. 6: einen Reinigungseinsatz in vergrößerter Seitenansicht, der von hinten achsparallel in ein Aufnahmeloch der Einsatzbuchse einsetzbar ist;
- Fig. 7: den Reinigungseinsatz nach Fig. 6 im axialen Schnitt;
- Fig. 8: den Reinigungseinsatz nach Fig. 6 in der Draufsicht und im axialen Schnitt.

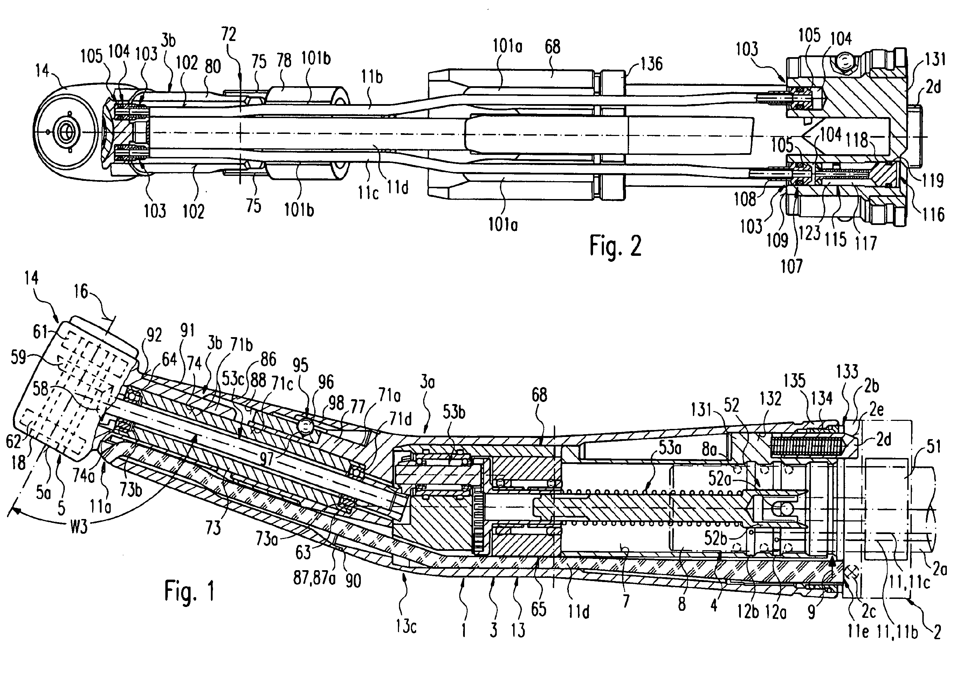

Das in Fig. 1 in seiner Gesamtheit mit 1 bezeichnete Behandlungsinstrument besteht aus einem hinteren Instrumententeil, nämlich einem sogenannten Anschlussteil 2, und einem vorderen Instrumententeil, nämlich dem sogenannten Handstück 3, die durch eine Kupplung 4, insbesondere eine Steckkupplung, vorzugsweise eine Steck/Dreh-Kupplung, lösbar miteinander verbunden sind. Beim vorliegenden Ausführungsbeispiel ist am vorderen Ende des Behandlungsinstruments 1 eine Haltevorrichtung 5 mit einer vorderen oder nicht dargestellten seitlichen Einstecköffnung 5a für ein nicht dargestelltes Werkzeug angeordnet, wobei das Werkzeug seitlich oder nach vorne abstehen kann. Das Handstück 3 kann sich gerade (nicht dargestellt) oder zur Einstecköffnung 5a abgewandten Seite hin gekrümmt oder winkelförmig erstrecken. Die Steck/Dreh-Kupplung wird durch eine im Querschnitt runde Kupplungsausnehmung 7 und einen darin mit geringem Bewegungsspiel einsteckbaren Kupplungszapfen 8 gebildet. Beim vorliegenden Ausführungsbeispiel ist die Kupplungsausnehmung 7 am hinteren Ende des Handstücks 3 angeordnet, und der im wesentlichen zylindrische Kupplungszapfen 8 erstreckt sich vom Anschlussteil 2 nach vorne. Im gekuppelten Zustand sind die Kupplungsausnehmung 7 und der Kupplungszapfen 8 durch eine Verrastungsvorrichtung 9 lösbar miteinander verrastet. Diese weist ein Verrastungselement auf, das in dem einen Kupplungsteil radial beweglich gelagert und durch eine Federkraft in eine die Teilungsfuge durchsetzende Verrastungsstellung vorgespannt ist, in der das Verrastungselement in eine Ringnut im anderen Kupplungsteil einfasst. Eine solche Verrastungsvorrichtung 9 verrastet beim Kuppeln selbsttätig, und sie ist beim Entkuppeln durch eine manuelle axiale Zugkraftausübung überdrückbar, wobei das Verrastungselement selbsttätig in seine Freigabestellung verdrängt wird.

Das Anschlussteil 2 ist mit einer flexiblen Versorgungsleitung 2a verbunden, die mit einem nicht dargestellten Steuergerät verbunden ist. Das Handstück 3 ist vorzugsweise auf dem Kupplungszapfen 8 frei drehbar gelagert, wodurch die Handhabbarkeit verbessert wird. Durch die Steck/Dreh-Kupplung 4 erstreckt sich wenigstens eine Medienleitung 11 für ein Behandlungs- oder Antriebsmedium, z. B. Wasser, Druckluft oder ein Wasser/Luft-Gemisch (Spray). Die Medienleitung 11 kann sich axial durch eine radiale Teilungsfuge (nicht dargestellt) oder Z-förmig durch eine hohlzylindrische Teilungsfuge zwischen der Kupplungsausnehmung 7 und dem Kupplungszapfen 8 erstrecken, wobei die Medienleitung 11 die Teilungsfuge im Bereich einer Ringnut 12a bzw. 12b im Kupplungszapfen 8 oder in der Kupplungsausnehmung 7 durchsetzt, so dass in jeder Drehstellung der Mediendurchgang gewährleistet ist. Beiderseits vom Durchgang ist die Teilungsfuge durch einen Dichtring 8a abgedichtet, der in einer Ringnut in der Wandung der Kupplungsausnehmung 7 oder in der Mantelfläche des Kupplungszapfens 8 angeordnet sein kann. Hierdurch ist eine freie Drehbarkeit um 360 ° und mehr gewährleistet. Die Medienleitung 11 erstreckt sich vom hinteren Ende des Behandlungsinstruments 1 zu dessen vorderem Endbereich, wobei sie teilweise als Kanal im Instrumentenkörper oder als Schlauch- bzw. Rohrleitung verlaufen kann. Die Medienleitung 11 mündet im vorderen Endbereich des Behandlungsinstruments 1 aus diesem aus, wobei diese Mündungsöffnung 11a auf die Behandlungsstelle bzw. auf die Spitze des Werkzeugs gerichtet ist.

Beim vorliegenden Ausführungsbeispiel sind zwei Medienleitungen 11b, 11c für Druckluft und Wasser oder ein Wasser/Luft-Gemisch (Spray) vorgesehen, die sich zu beiden Seiten eines Lichtleiters 11d erstrecken. Der Lichtleiter 11d erstreckt sich etwa achsparallel an bzw. in der den Kupplungszapfen 8 umgebenden Wandung des Handstücks 3, wobei sein hinteres Ende eine Liclit-Einstrahlöffnung 11e an der rückseitigen Stirnfläche des Handstücks 3 bildet. Das vordere Ende des Lichtleiters endet im Bereich der Mündungsöffnung 11a der Medienleitungen 11b, 11c, vorzugsweise zwischen den Mündungsöffnungen 11a. Am Anschlussteil 2 ist vorderseitig, hier auf den Kupplungszapfen 8, ein Drehring 2b drehbar gelagert, in dem in einer der Einstrahlöffnung 11e vorgeordneten Position eine Lampe 2c angeordnet ist, die durch Schleifringkontakte mit einem sich durch die Versorgungsleitung 2a erstreckenden Stromkreislauf (nicht dargestellt) verbunden ist. Die passende Position der Lampe 2c ist durch eine Nockenverbindung zwischen dem Handstück 3 und dem Drehring 2b gewährleistet. Ein zugehöriger Nocken 2d ist bezüglich dem Lichtleiter 11d in Umfangsrichtung versetzt am Handstück 3 angeordnet, vorzugsweise zwischen einer abstehenden Position und einer in Aufnahmeloch des Handstücks 3 versengten Position verschiebbar und durch eine Feder in die abstehende Position vorgespannt, so dass er beim Kuppeln und Drehen des Handstücks 3 selbsttätig in eine Rastausnehmung 2e des Drehrings 2d einrasten kann.

Das Handstück 1 weist somit einen Schaft 13 auf, der einstückig ausgebildet sein kann oder aus einem hinteren oder vorderen Handstückabschnitt 3a, 3b bestehen kann, die am Beginn des Bogens oder im Bereich der Scheitelstelle 13c des Winkels oder im Bereich des vorderen Handstückabschnitts 3b lösbar miteinander verbunden sind. Am vorderen Ende des Schaftes 13 befindet sich ein verdickter Kopf 14, in dem eine Aufnahmehülse 18 drehbar gelagert ist, in deren Einstecköffnung 5a das Werkzeug mit seinem Schaft einsteckbar und in an sich bekannter Weise durch eine Fixiervorrichtung lösbar fixierbar ist.

Bei diesem Behandlungsinstrument 1 ist ein Antriebsmotor 51, z.B. ein Elektromotor, im strichpunktiert dargestellten Anschlussteil 2 angeordnet und durch eine Antriebswelle bzw. einen Antriebswellenzug 53 mit wenigstens zwei, im Scheitelbereich druckfest miteinander verbundenen Antriebswellenabschnitten mit der Aufnahmehülse 18 antriebsmäßig verbunden. Im Bereich der Steckkupplung 4 weist der Antriebswellenzug 53 eine Steckkupplung 52 mit zwei formschlüssig miteinander korrespondierenden Steckkupplungselementen 52a, 52b auf, wodurch beim Kuppeln und Entkuppeln der Steckkupplung 4 zugleich ein Kuppeln und Entkuppeln der Steckkupplung 52 möglich ist.

Ein im hinteren Handstückabschnitt 3a des Handstücks 3 angeordneter Antriebswellenabschnitt 53a erstreckt sich bis in den Anfangsbereich der Krümmung oder in den Scheitelbereich des abgewinkelten Schaftes 13, wobei sein vorderes Ende durch einen sich im wesentlichen nur in der Krümmung oder Abwicklung oder im Scheitelbereich z. B. axial erstreckenden zweiten Antriebswellenabschnitt 53b antriebsmäßig mit einem dritten Antriebswellenabschnitt 53c verbunden sein kann, der sich im vorderen Handstückabschnitt 3b bis zur Aufnahmehülse 18 erstreckt und antriebsmäßig mit dieser verbunden ist. Der Antriebswellenabschnitt 53a ist durch die Steckkupplung 52 mit der Motorwelle des Antriebsmotors 51 verbunden. Zur Verbindung der Antriebswellenabschnitte 53a, 53b, 53c ist jeweils ein Zahnradgetriebe vorgesehen.

Die Antriebsverbindung zwischen dem dritten Antriebswellenabschnitt 53c und der Aufnahmehülse 18 ist durch ein Winkelzahnradgetriebe mit einem Kegelzahnrad 58 am vorderen Ende des dritten Antriebswellenabschnitts 53c und einem Kegelzahnrad 59 auf der Aufnahmehülse 18 gebildet. Der Zahneingriff zwischen dem Kegelzahnrädern 58, 59 ist bezüglich des dritten Antriebswellenabschnitts 53c auf dessen der Einstecköffnung 5a abgewandten Seite angeordnet. Hierdurch wird die Aufnahmehülse 18 in der gleichen Drehrichtung angetrieben, wie der erste Antriebswellenabschnitt 53a. Die Aufnahmehülse 18 ist mittels zwei Wälzlagern 61, 62 im Kopf 14 drehbar gelagert, die einen längs der Drehachse 16 gerichteten Abstand voneinander aufweisen, der größer ist als das Kegelzahnrad 58, so dass letzteres dazwischen angeordnet werden kann, einschließlich dem Kegelrad 59, das auf der der Einstecköffnung 5a abgewandten Seite des Kegelrades 58 und zugleich auf der der Einstecköffnung 5a zugewandten Seite des Wälzlagers 61 angeordnet ist, das der Einstecköffnung 5a weiter entfernt angeordnet ist als das andere Wälzlager 62. Zur Drehlagerung des dritten Antriebswellenabschnitts 53c ist jeweils ein Wälzlager 63, 64 auf den Endbereichen dieses Antriebswellenabschnitts 53c angeordnet, deren Außenringe in einem jeweils passenden Längsloch des Handstückabschnitts 3b sitzen und gelagert sind.

Die Ausgestaltung des Zahnrads 54 als Hohlrad ermöglicht bei radial kleiner Bauweise eine verhältnismäßig große Übersetzung der Drehzahl zwischen dem ersten und dem zweiten Antriebswellenabschnitt 53a, 53b.

Der in Fig. 1 zwischen der Mittelachse des vorderen Handstückabschnitts 3b und der Drehachse 16 der Aufnahmehülse 18 eingeschlossene Winkel W3 beträgt mehr als 90°, vorzugsweise im wesentlichen 100°. Eine solche Ausgestaltung ist unter Berücksichtigung der Anatomie im Mundraum eines Patienten besonders günstig.

Der vordere und der hintere Handstückabschnitt 3a, 3b sind durch eine Steckverbindung 71 mit einem Steckzapfen 71a und eine ihn mit geringen Bewegungsspiel aufnehmendes Steckloch 71c und eine Verrastungsvorrichtung 72 zur gegenseitigen Verrastung in der zusammengesteckten Position miteinander lösbar verbunden. Beim Ausführungsbeispiel erstreckt sich der Steckzapfen 71a vom vorderen Handstückabschnitt 3b nach hinten, und die Steckausnehmung 71c mündet am vorderen Ende des hinteren Handstückabschnitts 3a nach vorne aus, wobei beide Steckverbindungsteile vorzugsweise zylindrisch bzw. hohlzylindrisch ausgebildet sind und der Steckzapfen 71a mit geringem Bewegungsspiel in die Steckausnehmung 71c passt. Der Steckzapfen 71a ist durch eine vorzugsweise hohlzylindrische Lagerhülse 73 gebildet, die mit geringem Bewegungsspiel in einem Hülsenloch 74 entsprechender Größe und Form im vorderen Handstückabschnitt 3b sitzt, wobei sie im Hülsenloch 74 auch fest eingepresst sein kann. Durch die Lagerhülse 73 erstreckt sich mit Bewegungsspiel der vordere bzw. dritte Antriebswellenabschnitt 53c. Vorzugsweise sind die beiden Lager 63, 64 des Antriebswellenabschnitts 53c in Lagerausnehmungen in den Endbereichen der Lagerhülse 73 aufgenommen und gelagert. Dies gilt beim vorliegenden Ausführungsbeispiel für die Außenringe der Wälzlager 63, 64, die in endseitigen Stufenausnehmungen 73a, 73b der Lagerhülse 73 sitzen. Wenn die Lager durch Gleitlager gebildet sind, können sie jeweils durch einen Lagerring gebildet sein, der in der zugehöriger Lagerausnehmung 73a, 73b sitzt und in dem der Antriebswellen 53c mit geringem Bewegungsspiel drehbar gelagert ist.

Beim Ausführungsbeispiel ist die Steckausnehmung 71c durch eine nach vorne gerichtete Locherweiterung gebildet, an deren Stufenfläche 71d das hintere Ende der Lagerhülse 73 und der Außenring des Wälzlagers 63 anliegen und dadurch in Richtung nach hinten axial begrenzt sein kann bzw. können. In Richtung nach vorne kann der Lagerring bzw. Außenring des Wälzlagers 63 durch die Schulterfläche der hinteren Lagerausnehmung 73a begrenzt sein. In gleicher Weise können auch am vorderen Ende der Lagerhülse 73 diese und/oder der Lagerring bzw, der Außenring des Wälzlagers 64 an einer Stufenfläche 74a des Hülsenaufnahmelochs 74 und/oder der Lagerausnehmung 73b begrenzt sein. Zur axialen Fixierung des Antriebswellenabschnitts 53c an den Lagerringen bzw. Innenringen der Wälzlager 63, 64 könnten die auf den Antriebswellenabschnitt 53c fest aufgesetzten Zahnräder bzw. Kegelzahnräder dienen, wie es aus Fig. 1 zu entnehmen ist.

Die Verrastungsvorrichtung 72 weist wenigstens einen sich etwa achsparallel von dem einen Steckverbindungsteil der Steckverbindung 71 erstreckenden Verrastungsarm 75 auf, der quer zur Längsachse des Schaftabschnitts elastisch ausbiegbar ist und in seinem freien Endbereich mit einem Verrastungselement 76 verrastet ist, das an dem anderen Steckverbindungsteil angeordnet ist. Beim Ausführungsbeispiel erstreckt sich der Verrastungsarm 75 vom dem hinteren Handstückabschnitt 3a zugeordneten Steckverbindungsteil nach vorne, hier von einem vorderen Hülsenansatz 77, der vom hinteren Handstückabschnitt 3a vorragt. Dabei kann der Verrastungsarm 75 von einem Basisring 78 abstehen, der auf dem zugehörigen Steckverbindungsteil, hier auf dem hinteren Hülsenansatz 77 sitzt, vorzugsweise in einer endseitigen stufenförmigen Ringausnehmung 79, an deren Stufenfläche der Basisring 78 anliegen kann und dadurch in der einen axialen Richtung begrenzt ist. Zur Fixierung des Basisrings 78 kann dieser mit den ihn tragenden einen Steckverbindungsteil fest verbunden, z. B. verklebt, sein oder der Basisring 78 kann auch mit einem Presssitz auf dem Steckverbindungsteil fest angeordnet sein. Beim Ausführungsbeispiel ist die Dicke des Verrastungsarms 75 bezüglich der Dicke des Basisrings 78 wenigstens außen verjüngt, vorzugsweise beidseitig verjüngt, hier stufenförmig nach innen verjüngt.

Das Verrastungselement 76 kann durch einen Verrastungsvorsprung gebildet sein, der vom anderen Steckverbindungsteil radial nach außen vorsteht und vom Verrastungsarm 75 übergriffen und hintergriffen wird. Hierzu kann im vorderen Endbereich des Verrastungsarms 75 eine Verrastungsnase angeordnet sein, die vom Verrastungsarm 75 radial nach innen absteht. Beim Ausführungsbeispiel ist die Verrastungsnase durch eine Verrastungsausnehmung 81 in der Innenseite des Verrastungsarms 75 gebildet, mit der der Verrastungsarm 75 auf den Verrastungsvorsprung elastisch aufschnappt und diesen hintergreift.

Es ist besonders vorteilhaft, den Verrastungsvorsprung durch ein zusätzliches zapfenförmiges Bauteil 82, insbesondere eine Kugel, zu bilden, das in einem vorzugsweise runden und radial durchgehenden Aufnahmeloch 83 im anderen Steckverbindungsteil sitzt, und dessen radiale Abmessung so groß ist, dass es die Innenmantelfläche des Hülsenlochs 74 radial nach innen überragt und in eine Ausnehmung 84 in der Außenmantelfläche der Lagerhülse 73 einfasst. Hierdurch ist die Lagerhülse 73 formschlüssig mit dem vorderen Hülsenansatz 80 des vorderen Handstückabschnitts 3b verbunden und sowohl in Umfangsrichtung als auch in Axialrichtung fixiert. Die Ausnehmung 84 ist vorzugsweise durch eine kegelförmige Einsenkung gebildet, wobei das vorzugsweise durch eine Kugel gebildete runde Bauteil 82 an der Kegelfläche der Einsenkung anliegt und im Grund der Einsenkung Freiraum hat.

Es ist auch für die Verrastungsausnehmung 81 vorteilhaft, sie durch eine kegelförmige Einsenkung zu bilden, so dass das vorzugsweise durch eine Kugel gebildete runde Bauteil 82 auch an den Kegelflächen dieser Einsenkung anliegt. Wegen der verhältnismäßig geringen Dicke des flachen Verrastungsarms 75 kann diese Einsenkung an der Außenseite des Verrastungsarms 75 auslaufen.

Die Ausbildung des Verrastungsarms 75 am Basisring 78 hat den Vorteil, dass diese Teile einteilig aus elastisch biegsamen Metall, insbesondere Federstahl hergestellt werden können und der Träger des Basisrings 78, hier der Hülsenansatz 77, nicht aus elastischem Metall bzw. Federstahl hergestellt werden muss.

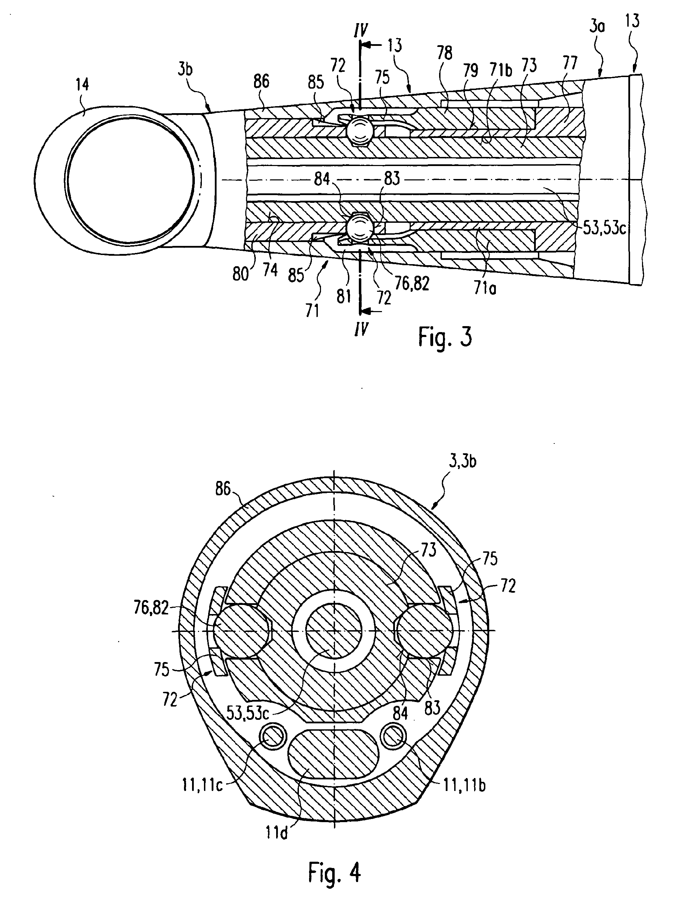

Wie sich insbesondere aus Fig. 3 deutlich entnehmen lässt, ermöglicht die sich vom Hülsenansatz 77 nach vorne erstreckende Ausgestaltung des Verrastungsarms 77 eine kleine Baugröße in der Querrichtung des vorderen Handstückabschnitts 13b, was durch die außenseitige Verjüngung des Verrastungsarms 75 bezüglich seines Trägers, hier des Basisrings 78 bzw. des Hülsenansatzes 77, bedingt ist. Vorzugsweise ist dadurch bedingt, dass der Verrastungsarm 75 radial nach innen versetzt angeordnet werden kann, so dass auch die Außenkontur des vorderen Handstückabschnitts 3b mit einer entsprechend geringeren Querschnittsgröße ausgebildet werden kann. Hierbei ist zu berücksichtigen, dass im Bereich der Behandlungsstelle, hier im Mundraum eines Patienten, wenig Raum zur Verfügung steht und deshalb jede Querschnittsverringerung von großer Bedeutung ist.

Eine weitere Querschnittsverringerung lässt sich dadurch erreichen, dass der Verrastungsarm 75 in eine außenseitige Ausnehmung 85, z.B. eine Abflachung, des Hülsenansatzes 80 einfasst.

Wie es sich insbesondere aus Fig. 4 entnehmen lässt, wird beim Fehlen von Ausnehmungen 85 eine weitere Querschnittsverringerung dadurch erreicht, dass der im Querschnitt durch eine flache Leiste gebildete Verrastungsarm 75 entsprechend der Krümmung des vorhandenen Umfangs des Hülsenansatzes 80 gekrümmt ist, oder entsprechend firstdachförmig abgewinkelt ist.

Beim Ausführungsbeispiel sind zwei Verrastungsvorrichtungen 72 spiegelbildlich einander diametral gegenüberliegend angeordnet, wodurch sich die Verrastungskräfte verdoppeln lassen und außerdem sich symmetrische Verrastungskräfte ergeben.

Ein Verrastungsvorgang und ein Lösen der Verrastung lassen sich handhabungsfreundlich und schnell durchführen. Zum Verrasten werden die Steckverbindungsteile 71a, 71b in einer Position zusammengesteckt, in der der oder die Verrastungsarme 75 axial mit der Position des zugehörigen Verrastungsvorsprungs übereinstimmen. Die Findung dieser Drehposition lässt sich erleichtern, wenn jeweils dem Verrastungsarm 75 die Ausnehmung 85 zugeordnet ist und das vordere Ende des Verrastungsarms 75 in der radialen Blickrichtung gerundet ist, oder die Ecken des Verrastungsarms 75 abgeschrägt sind. Hierbei erweisen sich die Rundung bzw. die Abschrägungen als Einführungsflächen, die den Verrastungsarm 75 in der richtigen Umfangsposition in die Ausnehmung 85 einführen und positionieren.

Im Übrigen sind beim Ausführungsbeispiel die Hülsenansätze 77, 80 bezüglich der dahinter und davor befindlichen Konfiguration der Handstückabschnitte 3a, 3b auf dem gesamten Umfang verjüngt und von einer Außenhülse 86 umgeben, die an ihrem hinteren und an ihrem vorderen Ende mit der Konfiguration des übrigen hinteren Handstückabschnitts 3a und vorderen Handstückabschnitts 3b in etwa abschließt. Die Außenhülse 86 weist in ihrem hinteren Bereich wenigstens einen, vorzugsweise zwei, nämlich einen hinteren und einen mittleren, Hülsenabschnitte 87, 88 auf, mit dem bzw. denen sie mit geringem Bewegungsspiel auf einem oder zwei passenden Zapfenabschnitten sitzt. Der hintere Hülsenabschnitt 87 ist durch eine Innenquerschnittserweiterung am hinteren Ende der Außenhülse 86 gebildet, die so groß ist, dass eine verjüngte Ringwand im Bereich des Hülsenabschnitts 87 verbleibt. Dieser nach außen verjüngte Hülsenabschnitt sitzt in einer stufenförmigen Ringnut 87a mit einer Stufenfläche 90 am hinteren Handstückabschnitts 3a.

Ein zweiter mittlerer Hülsenabschnitt 88 ist durch einen Bohrungsabschnitt im mittleren Bereich der Außenhülse 86 gebildet, in den das vordere Ende des Hülsenansatzes 77 mit geringem Bewegungsspiel einfasst.

Am vorderen Ende der Außenhülse 86 weist diese einen Hülsenabschnitt 91 und einen Innenquerschnitt auf, der mit geringem Bewegungsspiel auf dem Hülsenansatz 80 sitzt, der unter Bildung einer Stufenfläche 92 bezüglich des vorderen Bereichs des vorderen Handstückabschnitts 3b verjüngt ist. Die Längenabmessungen der Außenhülse 86, der Hülsenansätze 77, 80 und der Hülsenabschnitte 87, 88, 91 sind so ausgebildet, dass im zusammengesetzten Zustand der Steckverbindung 71 der vordere und hintere Rand der Außenhülse 86 an den Stufenflächen 90, 92 anliegt, wodurch der von der Außenhülse 86 umgebende Innenraum dicht abgedeckt ist.

Die Außenhülse 86 ist durch eine Drehsperrvorrichtung 95 gegen ein Verdrehen positioniert. Die Drehsperrvorrichtung kann zwischen der Außenhülse 86 und dem hinteren Handstückabschnitt 3a oder dem vorderen Handstückabschnitt 3b, insbesondere den Hülsenansätzen 77, 80 angeordnet sein. Beim Ausführungsbeispiel ist die Drehsperrvorrichtung 95 zwischen der Außenhülse 86 und dem Hülsenansatz 77 oder dem Basisring 78 angeordnet, wobei sie im montierten Zustand unter der Außenhülse 86 geschützt angeordnet ist. Sie kann durch einen Sperrzapfen 96 gebildet sein, der in passende Ausnehmungen 97, 98 in der Außenmantelfläche des Hülsenansatzes 77 und in der Innenmantelfläche der Außenhülse 86 einfasst, wobei eine der Ausnehmungen entgegen der Steckrichtung am zugehörigen Bauteil in Form einer Rinne ausläuft, wodurch die axiale Montage der Außenhülse 86 möglich ist.

Beim Ausführungsbeispiel ist der Sperrzapfen 96 durch eine Kugel gebildet, wobei die Ausnehmung 97 durch eine Kalotte gebildet ist und die Ausnehmung 98 in der Außenhülse 86 durch eine längsverlaufende und nach hinten auslaufende Rinne gebildet ist, so dass die Außenhülse 86 von vorne auf den Hülsenansatz 77 aufschiebbar ist, bzw. der hintere Handstückabschnitt 3a in die auf den Hülsenabschnitt 80 aufgeschobene Außenhülse 86 einschiebbar ist, wobei die Verrastung gleichzeitig und selbsttätig erfolgt. Zum Lösen werden die Handstückabschnitte 3a, 3b mit einer manuellen Zugkraft auseinandergezogen, wobei der Verrastungsarm 75 selbsttätig ausfedert und löst.

Für ein Lösen der Verbindungsvorrichtung am Behandlungsort, z. B. durch den Zahnarzt ist die Verrastungskraft nur so groß bemessen, daß die wenigstens eine Verrastungsvorrichtung 72 durch manuelles Zusammenschieben bzw. Auseinanderziehen der Verbindungsteile überdrückbar und somit verrastbar bzw. entrastbar ist. Soll dagegen ein Lösen am Behandlungsort, z. B. in einer Praxis, z. B. aus Sicherheitsgründen, nicht möglich sein, ist die Verrastungskraft so viel größer bemessen, daß ein Verbinden bzw. Lösen nur mit Hilfswerkzeugen, insbesondere in einer Werkstatt, durchgeführt werden kann.

Die Medienleitungen 11b, 11c und der Lichtleiter 11d erstrecken sich im Bereich zwischen dem hinteren Ende des hinteren Handstückabschnitts 3a und dem vorderen Handstückabschnitt 3b durchgehend, wobei sie in zugehörigen Rinnen 101a, 101b, 102 im Tragkörper 68 und/oder Basisring 78 und/oder im Hülsenansatz 80 verlaufen und durch kleine Röhrchen gebildet sein können, die jeweils durch eine Steckverbindung 103 mit dem hinteren Endbereich des Handstücks 3 bzw. dem vorderen Handstückabschnitt 3b verbunden und abgedichtet sind. Die Steckverbindungen 103 sind jeweils durch eine vorzugsweise zylindrische Steckausnehmung 104 im Handstück 3 und einen darin dicht einsteckbaren Steckzapfen 105 gebildet, der dicht mit der zugehörigen Medienleitung 11b, 11c verbunden ist, einen axialen Durchgangskanal 106 aufweist und durch eine Ringdichtung 107 in der Steckausnehmung 104 abgedichtet ist, die durch einen Dichtring gebildet ist, der in einer Außenringnut im Steckzapfen 105 oder in einer Innenringnut in der Steckausnehmung 104 sitzt und der jeweils die anliegende Innenmantelfläche der Steckausnehmung 104 oder die Außenmantelfläche des Steckzapfens 105 abdichtet. Zur Verbindung mit der Medienleitung 11b, 11c kann sich vom Steckzapfen 105 eine Verbindungshülse 108 erstrecken, auf die oder in die die Medienleitung 11b, 11c geschoben ist und abgedichtet ist, z.B. durch ein Dichtungsmittel wie ein Kleber oder durch einen Presssitz. Zur Montage dieser Leitungsverbindung ist es lediglich erforderlich, den Steckzapfen 105 mit der Medienleitung zu verbinden und in die Steckausnehmung 104 einzustecken oder umgekehrt. Insbesondere im Bereich der hinteren Enden der Medienleitungen 11b, 11c ist es vorteilhaft, die Steckausnehmungen 104 nach vorne jeweils an einer quer, insbesondere etwa rechtwinklig zur Mittelachse des hinteren Handstückabschnitts 13a verlaufenden Stirnflächenabschnitt 109 ausmünden zu lassen, so dass die sich etwa achsparallel erstreckenden Medienleitungen ohne Biegung montiert werden können, bzw. angeordnet sind. Die Steckausnehmungen 104 sind jeweils durch einen Querkanal 111a, 111b mit der zugehörigen Ringnut 12a, 12b verbunden, die einen axialen Abstand voneinander aufweisen. Auf diese Weise ist im Funktionsbetrieb des Handinstruments 1 der Z-förmige Durchfluss des bzw. der Medien durch die hohlzylindrische Teilungsfuge der Steck/Dreh-Kupplung 4 gewährleistet.

Um in dem oder den Medien enthaltene Verunreinigungen in Form von kleinen Partikeln vor einem Strömungstransport zur zugehörigen Auslassöffnung 11a bzw. - düse zu schützen, ist im hinteren Bereich des Handstücks in der wenigstens einen Medienleitung 11, hier in der Wasserleitung 11c, eine Reinigungsvorrichtung 115 angeordnet, die durch die bezüglich dem zugehörigen Steckzapfen 105 verlängerte Steckausnehmung 104 und eine Reinigungspatrone 116 gebildet ist, die in den verlängerten Bereich der Steckausnehmung 104 von der dem zugehörigen Steckzapfen 105 abgewandten Seite her, hier von hinten, in die Steckausnehmung 104 lösbar abgedichtet eingesteckt bzw. einsteckbar ist.

Da der Anschluss des Schlauches oder des Röhrchens der zugehörigen Medienleitung 11 bzw. 11c auch anders als im Sinne der Steckverbindung 103 ausgebildet sein kann, z.B. mit einem einschraubbaren Anschlussstutzen, wird im folgenden der verlängerte Bereich der Steckausnehmung 104 in den die Patrone 116 einsetzbar ist, mit dem Bezugszeichen 117 bezeichnet. Zur axialen Fixierung der Patrone 116 in der Steckausnehmung 117 ist beim Ausführungsbeispiel eine Gewindeverbindung 118 vorgesehen, mit einem Innengewinde 118a in einem erweiterten Wandabschnitt der Steckausnehmung 117 und einem Außengewinde 118b auf der Patrone 116. Die Gewindeverbindung 118 ist vorzugsweise im hinteren Bereich der Patrone 116 bzw. der Steckausnehmung 117 angeordnet, wobei die Gewindeverbindung 118 vorzugsweise vor einem hinteren Dichtungsabschnitt 119 angeordnet ist. Im Bereich des Dichtungsabschnitts 119 ist ein Dichtring 119a vorgesehen, der vorzugsweise im mittleren Bereich des Dichtungsabschnitts 119 angeordnet ist und in einer Ringnut sitzt, die in der zylindrischen Mantelfläche des Dichtungsabschnitts 119 der Patrone 116 oder in der hohlzylindrischen Innenmantelfläche des Dichtungsabschnitts 119 der Steckausnehmung 117 angeordnet ist.

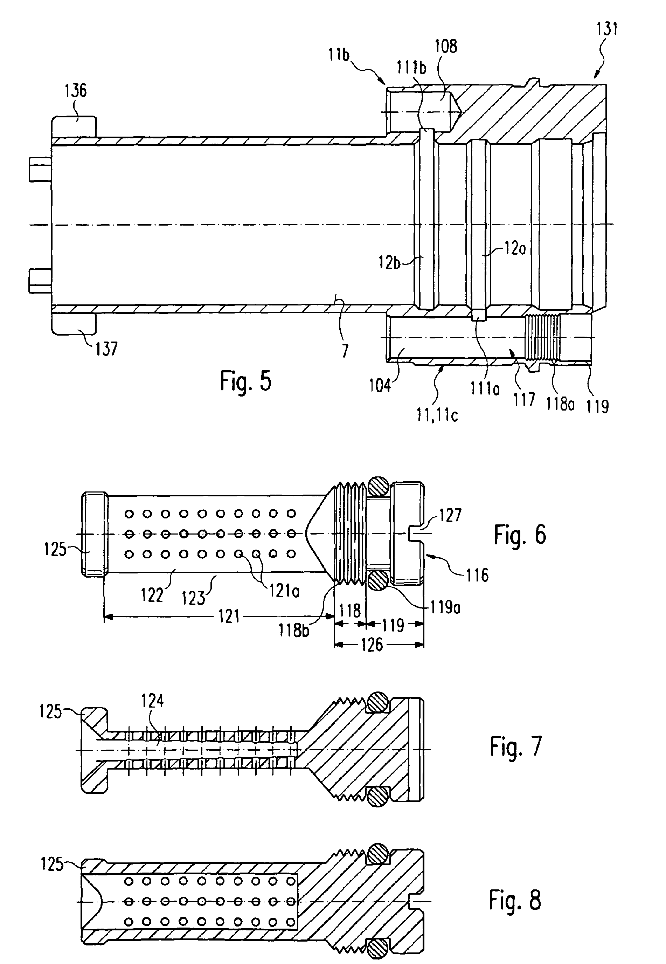

Wie insbesondere Fig. 5 bis Fig. 8 zeigen, weist die Patrone 116 einen sich längs erstreckenden Reinigungsabschnitt 121 auf, der größer bemessen ist, als die Querschnittsgröße der Patrone 116 und der vom zu reinigenden Medium quer zur Längsrichtung der Patrone 116 durchströmt wird. Hierdurch lässt sich ein großer Reinigungsquerschnitt (Durchströmungsfläche) erreichen. Der Reinigungsabschnitt 121 kann einen Filter oder ein Sieb aufweisen. Beim Ausführungsbeispiel ist der Reinigungsabschnitt 121 durch einen im Querschnitt verjüngten Hülsenabschnitt 122 gebildet, dessen Wandung eine Vielzahl kleiner Sieblöcher 121a aufweist, die der Reinigung des Mediumstromes dienen, wenn dieser aus dem Freiraum 123 außerhalb des verjüngten Hülsenabschnitts 122 in den im Hülsenabschnitt 122 axial verlaufenden Kanal 124 strömt. Der Freiraum 123 ist vorzugsweise ringförmig ausgebildet. Die Querschnittsform des Hülsenabschnitts 122 kann rund sein. Beim Ausführungsbeispiel weist der Hülsenabschnitt 122 eine flache Querschnittsform auf. Hierdurch wird die Oberfläche bzw. Wandungsfläche des Hülsenabschnitts 122 vergrößert, so dass eine größere Anzahl der Sieblöcher 121a realisiert werden können und deshalb die beim Durchströmen des Hülsenabschnitts 122 stattfindende Drosselung gering gehalten werden kann. Dies wird durch den verhältnismäßig großen Durchströmungsquerschnitt erreicht.

Zur Abdichtung des wenigstens einen Freiraums 123 weist die Patrone 116 einen den Freiraum 123 nach vorne begrenzenden Flansch 125 auf, der sich mit geringem Bewegungsspiel bis zur Innenmantelfläche der Steckausnehmung 117 erstreckt und dadurch eine Abdichtung bildet. Die Patrone 116 besteht somit aus dem Flansch 125, dem sich davon nach hinten erstreckenden verjüngten Hülsenabschnitt 122 und einem rückseitigen wieder verdickten Basisabschnitt 126, in dessen Bereich der Gewindeverbindungsabschnitt 118 und der Dichtungsabschnitt 119 angeordnet sind und der an seiner Rückseite ein Angriffselement 127 zum Ein- und Ausschrauben der Patrone 116 aufweist. Das Angriffselement 127 kann z.B. durch einen Schlitz für einen Schraubendreher gebildet sein.

Beim Ausführungsbeispiel ist das Kupplungselement der Steck/Drehkupplung 4, hier die Kupplungsausnehmung 7, in einem Einsatzstück 131 angeordnet, das von hinten in eine passende Steckausnehmung 132 im Handstück eingesetzt und durch eine Fixiervorrichtung 133 fixiert ist. Das Einsatzstück 131 befindet sich im hinteren Bereich des Handstücks 3 und schließt in etwa mit dessen Rückseite ab. Die Fixierung kann durch eine Schraubhülse 134 erfolgen, die von hinten zwischen das Einsatzstück 131 und die es umgebende Ringwand 135 des Handsktücks 3 in die Ringwand 135 eingeschraubt ist und das Einsatzstück 131 gegen ein Herausziehen nach hinten fixiert.

Insbesondere im hinteren Bereich weist das Einsatzstück 131 eine Wandstärke, hier eine Ringwand, auf, die radial größer ist, als die Steckausnehmung 104 bzw. 117, so daß diese darin in etwa achsparalleler Anordnung angeordnet werden kann. Im vorderen Bereich kann das Einsatzstück 131 verjüngt sein und einen Flansch 136 zur Zentrierung in der Steckausnehmung 132 aufweisen. Hierdurch ist Platz für die wenigstens eine Medienleitung 11c geschaffen, wobei im Flansch 136 wenigstens eine Durchgangsöffnung 137 für die wenigstens eine Medienleitung aufweist. Die Schraubhülse 134 weist an ihrem hinteren Ende ein von hinten zugängliches, nicht dargestelltes Drehangriffselement für ein Werkzeug zum Ein- und Ausschrauben auf.

Die Patrone 116 besteht vorzugsweise aus Kunststoff, wobei es sich insbesondere um ein Spritzgießteil handelt, das trotz seiner komplizierten Form einfach und schnell und somit kostengünstig durch Spritzgießen hergestellt werden kann.

Die Patrone 116 befindet sich in einer handhabungsfreundlichen Position. Sie kann handhabungsfreundlich und schnell aus- und eingeschraubt werden, z.B. gegen eine neue Patrone 116 ausgetauscht werden. Auch eine Reinigungskontrolle durch ein Aus- und Einschrauben der Patrone 116 lässt sich einfach und schnell durchführen. Da die Patrone 116 von hinten zugänglich ist, ist sie von der Seite des Handstücks 3 her nicht sichtbar und geschützt angeordnet. Eine besondere Abdeckung ist nicht erforderlich. Das Aussehen des Handstücks 3 wird deshalb durch das Vorhandensein der Patrone 116 nicht beeinträchtigt.

## Patentansprüche

1. Medizinisches oder dental-medizinisches Handstück (3), mit einem länglichen Schaft (13), der an seinem hinteren Ende ein Kupplungselement (7) zum Ankuppeln an ein passendes Kupplungselement (8) einer flexiblen Versorgungsleitung (2a) aufweist, und in seinem vorderen Bereich eine Haltevorrichtung (5) für ein Werkzeug aufweist, wobei eine Medienleitung (11) das Handstück (3) von hinten nach vorne durchsetzt, in der eine Patrone (116) angeordnet ist, die von außen in eine Steckausnehmung (117) eingesetzt ist,
**dadurch gekennzeichnet,**
**dass** die Steckausnehmung (117) in einem im hinteren Bereich des Handstücks (3) befindlichen Einsatzstück (131) zur Aufnahme des Kupplungselements (7) angeordnet und von der Rückseite des Einsatzstücks (131) her zugänglich ist.

2. Handstück nach Anspruch 1,
**dadurch gekennzeichnet,**
**dass** das Kupplungselement (8) eine Kupplungsausnehmung ist, in deren Bereich sich ein radialer Medienleitungsabschnitt (111a) in die Steckausnehmung (117) erstreckt.

3. Handstück nach Anspruch 1 oder 2,
**dadurch gekennzeichnet,**
**dass** die Steckausnehmung (117, 104) einen axialen Wandabschnitt achsparallel durchsetzt.

4. Handstück nach Anspruch 3,
**dadurch gekennzeichnet,**
**dass** im vorderen Bereich der Steckausnehmung (104) ein hülsenförmiger Steckzapfen (105) dicht eingesetzt ist, von dem sich ein Rohr oder ein Schlauch als Medienleitung nach vorne erstreckt.

5. Handstück nach einem der vorherigen Ansprüche 1 bis 4,
**dadurch gekennzeichnet,**
**dass** das Einsatzstück (131) von hinten in eine Steckausnehmung (132) im Handstück (3) eingesetzt und fixiert ist.

6. Handstück nach einem der vorherigen Ansprüche 1 bis 5,
**dadurch gekennzeichnet,**
**dass** die Patrone (116) in ihrem hinteren Endbereich einen stopfenförmigen Basisabschnitt (126) aufweist, der dicht in der Steckausnehmung (117) sitzt, von dem sich ein Reinigungsabschnitt (121) nach vorne erstreckt, und der an seinem Stirnende ein Angriffselement (127) zum Ziehen der Patrone (116) aufweist.

7. Handstück nach Anspruch 6,
**dadurch gekennzeichnet,**
**dass** der Reinigungsabschnitt (121) vom Behandlungsmedium quer durchströmbar ist und im dem Basisabschnitt (126) abgewandten Endbereich des Reinigungsabschnitts (121) ein Flansch (125) zum Abdichten des den Reinigungsabschnitt (121) vor und nach geordneten Strömungsfreiraums angeordnet ist.

8. Handstück nach Anspruch 6 oder 7,
**dadurch gekennzeichnet,**
**dass** der Reinigungsabschnitt die Form eines Rohres aufweist, insbesondere die Form eines flachen Rohres, dessen Hohlraum (124) den Flansch (125) axial durchsetzt.

9. Handstück nach einem der Ansprüche 6 bis 8,
**dadurch gekennzeichnet,**
**dass** der Reinigungsabschnitt (121) quer mit kleinen Löchern (121a) perforiert ist.

10. Handstück nach einem der Ansprüche 6 bis 9,
**dadurch gekennzeichnet,**
**dass** der Basisabschnitt (126) an seinem Umfang ein Schraubgewinde (118) aufweist.

11. Handstück nach einem der Ansprüche 6 bis 10,
**dadurch gekennzeichnet,**
**dass** der Basisabschnitt (126) neben dem Schraubgewinde (118) einen Dichtungsabschnitt (119) aufweist.

12. Handstück nach einem der Ansprüche 6 bis 11,
**dadurch gekennzeichnet,**
**dass** der Basisabschnitt (126) an seinem Umfang eine Ringdichtung aufweist, die vorzugsweise durch einen in einer Ringnut angeordneten Dichtring (119a) gebildet ist, insbesondere zwischen dem Schraubgewinde (118) und einem zylindrischen Abschnitt angeordnet ist.

## Claims

1. Medical or dental-medical handpiece (3), having an elongate shaft (13) which has at its rearward end a coupling element (7) for coupling to a matching coupling element (8) of a flexible supply line (2a), and has in its forward region a holding device (5) for a tool, wherein a media line (11), in which a cartridge (116) is arranged, passes through the handpiece (3) from the rear forwardly, which cartridge is inserted from the outside into an insertion recess (117),
**characterised in that**,
the insertion recess (117) is arranged in an insert piece (131) located in the rearward region of the handpiece (3) for receiving the coupling element (7) and is accessible from the rear side of the insert piece (131).

2. Handpiece according to claim 1,
**characterised in that**,
the coupling element (8) is a coupling recess in the region of which a radial media line section (111a) extends into the insertion recess (117).

3. Handpiece according to claim 1 or 2,
**characterised in that**,
the insertion recess (117, 104) passes axis parallel through an axial wall section.

4. Handpiece according to claim 3,
**characterised in that**,
a sleeve-like insertion pin (105) is tightly emplaced in the forward region of the insertion recess (104), from which a pipe or a tube extends forwardly as a media line.

5. Handpiece according to any of preceding claims 1 to 4,
**characterised in that**,
the insert piece (131) is emplaced from the rear into an insertion recess (132) in the handpiece (3) and fixed.

6. Handpiece according to any of preceding claims 1 to 5,
**characterised in that**,
the cartridge (116) has in its rearward end region a stopper-like base section (126) which sits tightly in the insertion recess (117), from which a cleaning section (121) extends forwardly, and which has at its end face an engagement element (127) for drawing the cartridge (116).

7. Handpiece according to claim 6,
**characterised in that**,
the cleaning section (121) can be flowed through transversely by the treatment medium and in the end region of the cleaning section (121) away from the base section (126) there is arranged a flange (125) for sealing the flow cavity arranged before and behind the cleaning section (121).

8. Handpiece according to claim 6 or 7,
**characterised in that**,
the cleaning section has the form of a pipe, in particular the form of a flat pipe, the hollow space (124) of which axially passes through the flange (125).

9. Handpiece according to any of claims 6 to 8,
**characterised in that**,
the cleaning section (121) is transversely perforated with small holes (121a).

10. Handpiece according to any of claims 6 to 9,
**characterised in that**,
the base section (126) has at its perimeter a screw thread (118).

11. Handpiece according to any of claims 6 to 10,
**characterised in that**,
the base section (126) has, along with the screw thread (118), a sealing section (119).

12. Handpiece according to any of claims 6 to 11,
**characterised in that**,
the base section (126) has at its perimeter a ring seal, which is preferably formed by a sealing ring (119a) arranged in a ring groove, in particular between the screw thread (118) and a cylindrical section.

## Revendications

1. Pièce à main (3) médicale ou médico-dentaire, comportant une tige (13) longiligne, qui, au niveau de son extrémité arrière, est munie d'un élément de couplage (7) destiné à être couplé à un raccord (8) adapté d'une conduite d'alimentation (2a) flexible, et dans sa partie avant est munie d'un dispositif de fixation (5) pour un outil, une conduite de fluide (11) traversant la pièce à main (3) de l'arrière vers l'avant et logeant une cartouche (116), qui est insérée depuis l'extérieur dans un évidement d'enfichage (117), **caractérisée en ce que** l'évidement d'enfichage (117) est agencé dans un insert (131), disposé dans la partie arrière de la pièce à main (3) et destiné à recevoir l'élément de couplage (7), et est accessible à partir du côté arrière de l'insert (131).

2. Pièce à main selon la revendication 1, **caractérisée en ce que** l'élément de couplage (7) est un évidement d'accouplement, dans la zone duquel un tronçon (111a) de la conduite de fluide s'étend dans l'évidement d'enfichage (117).

3. Pièce à main selon la revendication 1 ou 2, **caractérisée en ce que** l'évidement d'enfichage (117, 104) s'étend parallèlement à l'axe à travers une partie de paroi axiale.

4. Pièce à main selon la revendication 3, **caractérisée en ce que** dans la zone avant de l'évidement d'enfichage (104) est inséré de manière étanche un embout mâle de raccordement (105), à partir duquel un tube ou un tuyau flexible formant une conduite de fluide s'étend vers l'avant.

5. Pièce à main selon l'une quelconque des revendications 1 à 4, **caractérisée en ce que** l'insert (131) est introduit depuis l'arrière dans un évidement d'enfichage (132) ménagé dans la pièce à main (3).

6. Pièce à main selon l'une quelconque des revendications 1 à 5, **caractérisée en ce que** la cartouche (116) dans sa zone d'extrémité arrière comporte un tronçon de base (126) en forme de bouchon, lequel est logé de manière étanche dans l'évidement d'enfichage (117), à partir duquel un tronçon de nettoyage (121) s'étend vers l'avant et lequel comporte au niveau de son extrémité frontale un élément de prise (127) pour tirer la cartouche (116).

7. Pièce à main selon la revendication 6, **caractérisée en ce que** le tronçon de nettoyage (121) peut être traversé par un fluide de traitement, et dans la zone d'extrémité du tronçon de nettoyage (121), opposée au tronçon de base (126), est agencée une collerette (125) destinée à assurer l'étanchéité de l'espace libre de circulation situé en amont et en aval du tronçon de nettoyage (121).

8. Pièce à main selon la revendication 6 ou 7, **caractérisée en ce que** le tronçon de nettoyage a la forme d'un tube, en particulier la forme d'un tube plat, dont l'espace creux (124) traverse la collerette (125) dans le sens axial.

9. Pièce à main selon l'une quelconque des revendications 6 à 8, **caractérisée en ce que** le tronçon de nettoyage (121) est perforé transversalement par de petits trous (121 a).

10. Pièce à main selon l'une quelconque des revendications 6 à 9, **caractérisée en ce que** le tronçon de base (126) comporte un filetage (118) sur son pourtour.

11. Pièce à main selon l'une quelconque des revendications 6 à 10, **caractérisée en ce que** le tronçon de base (126) comporte un tronçon d'étanchéité (119) à côté du filetage (118).

12. Pièce à main selon l'une quelconque des revendications 6 à 11, **caractérisée en ce que** le tronçon de base (126) comporte sur son pourtour une garniture d'étanchéité annulaire, qui est formée de préférence par une bague d'étanchéité (119a), posée dans une rainure annulaire et agencée en particulier entre le filetage (118) et un tronçon cylindrique.
